# EUROPÄISCHE PATENTSCHRIFT

(11) **EP 3 386 308 B1**
(45) Veröffentlichungstag und Bekanntmachung des Hinweises auf die Patenterteilung: **30.10.2019**
(21) Anmeldenummer: 17712714.9
(22) Anmeldetag: 02.03.2017
(51) Int. Cl.: A21B 5/03, A21B 7/00

(54) **BACKVORRICHTUNG SOWIE BETRIEBSVERFAHREN**
BAKING DEVICE AND OPERATING METHOD
DISPOSITIF DE CUISSON AINSI QUE PROCÉDÉ DE FONCTIONNEMENT

(43) Veröffentlichungstag der Anmeldung: 17.10.2018
(73) Patentinhaber: Eugster/Frismag AG, 8580 Amriswil (CH)
(72) Erfinder: RIESSBECK, Wolfgang, 8597 Landschlacht (CH); WÄGER, Simon, 8580 Amriswil (CH); ZWAHLEN, Christof, 8590 Romanshorn (CH)
(74) Vertreter: Behrmann, Niels
(86) Internationale Anmeldenummer: PCT/EP2017/054867
(87) Internationale Veröffentlichungsnummer: WO 2018/157930

(56) Entgegenhaltungen:
- WO-A2-2013/124809
- DE-A1-102015 205 706

## Beschreibung

Die Erfindung betrifft eine Haushaltsbackvorrichtung gemäß dem Oberbegriff des Anspruchs 1, zum Backen eines Lebensmittelproduktes, insbesondere eines Flachbrotes, aus einer zunächst in einer Portionskapsel aufgenommenen Teigportion, umfassend eine Backeinrichtung zum Backen der Teigportion, insbesondere nach einem vorhergehenden Verflachen, insbesondere Walzen oder Pressen der Teigportion, sowie eine Kapselentleerungseinrichtung zum Entleeren der Teigportion aus der Portionskapsel, wobei die Kapselentleerungseinrichtung ein (bei in der Vorrichtung positionierter Portionskapsel relativ zur Positionskapsel) entlang eines Verstellweges verstellbares Kraftbeaufschlagungselement zum Kraftbeaufschlagen, insbesondere Deformieren und/oder Verstellen und/oder klemmenden Halten, der Portionskapsel aufweist, welches mit einem Elektromotor antreibbar ist.

Ferner betrifft die Erfindung ein Verfahren gemäß Anspruch 8 zum Betreiben einer Haushaltsbackvorrichtung, insbesondere einer erfindungsgemäßen Haushaltsbackvorrichtung, zum Backen eines Lebensmittelproduktes, insbesondere eines Flachbrotes, wobei in einer Kapselentleerungseinrichtung der Haushaltsbackvorrichtung zum Entleeren einer Teigportion aus einer Portionskapsel ein Kraftbeaufschlagungselement mit einem Elektromotor derart angetrieben wird, dass dieses entlang eines Verstellweges relativ zur Portionskapsel, insbesondere translatorisch oder alternativ entlang einer zumindest abschnittsweise gekrümmten Bahn, verstellt wird und die Portionskapsel kraftbeaufschlagt.

Aus der WO 2013/124809 A2 ist eine Haushalts-Flachbrotbackvorrichtung bekannt, bei der eine Teigportion aus einer Portionskapsel entleert wird, indem die Portionskapsel von einem Stößel kraftbeaufschlagt wird. Probleme können dann auftreten, wenn der Kapselöffnungsprozess mit anderen als vom Hersteller definierten und zur Verfügung gestellten Portionskapseln durchgeführt und/oder Portionskapseln mit tiefgefrorener Teigportion eingesetzt werden. Hier besteht dann das Risiko, dass die beim Kapselöffnungsprozess beteiligten Bauteile mit Fehlbelastungen bzw. Überlastungen beaufschlagt werden, was dazu führen kann, dass beteiligte Bauteile deformiert oder zerstört werden. Auch eine fehlerhafte Positionierung einer ansonsten zulässigen, Portionskapsel kann zu Fehlbelastungen führen. Dies kann ebenso zur Deformation oder Zerstörung der im Kapselöffnungsprozess beteiligten Bauteile führen.

Ausgehend von dem vorgenannten Stand der Technik liegt der Erfindung daher die Aufgabe zugrunde eine alternative, verbesserte Haushaltsbackvorrichtung, insbesondere zur Herstellung von Flachbrot, anzugeben, die derart ausgebildet ist, dass der Einsatz unzulässiger Portionskapseln und/oder eine Fehlpositionierung von Portionskapseln und/oder ein Einsatz von Portionskapseln mit tiefgefrorener Teigportion nicht zu einer Bauteilbeschädigung von am Portionskapselöffnungsprozess beteiligten Bauteilen führt. Ebenso besteht die Aufgabe darin, ein entsprechend verbessertes Betriebsverfahren für eine Haushaltsbackvorrichtung anzugeben, welches sicherstellt, dass Bauteilbeschädigungen beim Kapselöffnungsprozess sicher vermieden werden.

Diese Aufgabe wird hinsichtlich der Haushaltsbackvorrichtung mit den Merkmalen des Anspruchs 1 gelöst.

Hinsichtlich des Verfahrens wird die Aufgabe mit den Merkmalen des Anspruchs 8 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, während des Kapselöffnungsprozesses ein elektrisches Motorsignal, insbesondere ein Strom- oder Spannungssignal, ganz besonders bevorzugt ein Stromaufnahmesignal des Elektromotors zum Antreiben des mindestens einen Kraftbeaufschlagungselementes zu erfassen und mit einem Referenz- bzw. Grenzwert für die jeweilige Verstellposition des Kraftbeaufschlagungselementes entlang des Verstellweges auf die Portionskapsel bzw. ein Messer zum Durchstoßen einer Kapseldeckelfolie oder eine Kapselauflage für die Portionskapsel zu, zu vergleichen. Ist das gemessene oder von Steuermitteln bereitgestellte Motorsignal, insbesondere Motorsignalpegel bzw. -werte gleich groß wie oder größer als der jeweilige positionsspezifische Soll- bzw. Referenzwert, d.h. als das der entsprechenden Verstellposition des Kraftbeaufschlagungselementes zugeordnete Referenzsignal wird ein Fehler bzw. eine Gefährdung erkannt und eine Aktion ausgeführt, nämlich ein optisches und/oder akustisches und/oder haptisch wahrnehmbares Alarmsignal ausgegeben und/oder der Elektromotor derart angesteuert wird, dass die Verstellbewegung des Kraftbeaufschlagungselementes in Richtung Portionskapsel (bzw. in Richtung eines Messers und/oder einer Kapselauflage) gestoppt oder verlangsamt und/oder das Kraftbeaufschlagungselement zurück in seine Ausgangsposition verstellt bzw. angetrieben wird.

Anders ausgedrückt ist die Haushaltsbackvorrichtung also derart ausgebildet und/oder wird derart betrieben, dass der Kapselentleerungsvorgang der Kapselentleerungseinrichtung überwacht wird. Vorrichtungsgemäß sind hierzu entsprechende, bevorzugt einen Mikrokontroller umfassende Überwachungsmittel vorgesehen, umfassend Vergleichsmittel, die dazu eingerichtet sind, einen Verlauf des elektrischen Motorsignals des Elektromotors, insbesondere ein Strom- oder Spannungssignal, bevorzugt ein Stromaufnahmesignal über den Verstellweg des Kraftbeaufschlagungselementes auf Erreichen oder Überschreiten eines sich über den Verstellweg des Kraftbeaufschlagungselementes ändernden Referenzsignal zu überwachen und bei Erreichen oder Überschreiten des Referenzsignals eine Aktion auszuführen. Der Erfindung liegt die Erkenntnis zugrunde, dass die Höhe bzw. der Pegel des elektrischen Motorsignals, insbesondere des Stromsignals das wirksame Drehmoment des Elektromotors definiert. Steigt das Drehmoment des Elektromotors an, so erhöht sich auch das Motorsignal (bzw. der Motorsignalspegel), insbesondere die Stromaufnahme. Wird beim Kapselöffnen vom Kraftbeaufschlagungselement eine Kraft auf die Portionskapsel ausgeübt bzw. aufgebracht, um diese zu entleeren, insbesondere zu deformieren und/oder gegen eine Kapselauflage und/oder ein Messer zu pressen, dann steigt auch das Motordrehmoment. Folglich steigt auch das Motorsignal des Elektromotors des Kraftbeaufschlagungselementes. Ebenso steigt das Drehmoment und somit das Motorsignal des Elektromotors, wenn der Kraftbeaufschlagungselement der Kapselöffnungseinheit auf einen Widerstand, wie einen Fremdkörper auftrifft und gegen diesen drückt.

Wesentlich bei der Erfindung ist, dass das Motorsignal, sprich ein Motorsignalpegel nicht mit einem festen bzw. konstanten Referenzwert verglichen wird, sondern das aktuellen Motorsignal bzw. ein jeweiliger aktueller Motorsignalpegel mit einem bezogen auf das Kraftbeaufschlagungselement positionsabhängigen Referenzsignal, also jeweiligen Referenzwerten, die sich über den Verstellweg, in Abhängigkeit der Verstellposition ändern. Dabei ändert sich das Referenzsignal positionsabhängig bzw. ergibt sich aus den an unterschiedlichen Verstellpositionen des Kraftübertragungselementes entlang des Verstellweges zu erwartenden Drehmomenten und damit Motorsignalen bzw. Motorsignalpegeln während des Öffnungsprozesses sowie Sicherheitsfaktoren. So werden beispielsweise bei der Bewegung des Kraftbeaufschlagungselementes aus einer Ausgangsposition heraus bis zum ersten Kontakt des Kraftbeaufschlagungselementes mit der Portionskapsel nur Drehmomente bzw. Motorsignalpegel, insbesondere Stromaufnahmepegel des Elektromotors erwartet, da in diesem ersten Bewegungs-Abschnitt des Kraftbeaufschlagungselementes entlang des Verstellweges lediglich die Reibungswiderstände des Systems überwunden werden müssen. Steigt in diesem Bewegungsabschnitt, insbesondere die Stromaufnahme (unzulässig) an und übersteigt mindestens einen diesem ersten Bewegungsabschnitt zugeordneten Grenz- bzw. Referenzwert, so kann darauf geschlossen werden, dass die angetriebenen Bauteile der Kapselöffnungseinrichtung auf einen (unzulässigen) Widerstand gestoßen sind. Mögliche Widerstände sind dabei beispielsweise die eingangs erläuterten Fremdportionskapseln oder Fremdkörper, eine fehlpositionierte Portionskapsel oder ein tiefgefrorener Teigkörper. Ab einem Kontakt des mindestens einen Kraftbeaufschlagungselementes mit der Portionskapsel wird ein ansteigendes Drehmoment und damit ein ansteigendes Motorsignal, insbesondere eine ansteigende Stromaufnahme erwartet, was sich in einem für diesen Bewegungsabschnitt erhöhten Referenzsignal bzw. Referenzwerten auszeichnet, d.h., der Grenzwert der ab Kapselberührung überschritten werden muss, damit ein Fehler erkannt und eine Aktion ausgelöst wird ist höher als in dem davor durchgeführten Bewegungsabschnitt.

Die erfindungsgemäße Haushaltsbackvorrichtung umfasst eine Backeinrichtung, insbesondere eine Backkammer zum Backen der Teigportion. Ganz besonders bevorzugt umfasst die Haushaltsbackvorrichtung auch Formmittel zum Formen der Teigportion, insbesondere Flachen der Teigportion, vor und/oder während des Backprozesses, bei welchem die Teigportion bevorzugt auf Temperaturen von über 150°C, ganz besonders bevorzugt zwischen 180°C und 280°C erhitzt wird, insbesondere zwischen zwei Backplatten der Backeinrichtung. Ganz besonders bevorzugt ist es, wenn die Formmittel integraler Bestandteil der Backeinrichtung sind, insbesondere in Form der Backplatten, zwischen denen die Teigportion verformt, insbesondere gepresst wird.

Im Hinblick auf die konkrete Ausgestaltung des mindestens einen Kraftbeaufschlagungselementes gibt es unterschiedliche Möglichkeiten. Gemäß einer ersten alternativen Realisierungsform der Vorrichtung und des Betriebsverfahrens ist vorgesehen, als Kraftbeaufschlagungselement einen Stößel einzusetzen, der mittels eines Elektromotors entlang eines Verstellweges, beispielsweise translatorisch, antreibbar ist, um die Portionskapsel kraftzubeaufschlagen, insbesondere zu deformieren, um die Teigportion aus der Portionskapsel herauszudrücken. Auch ist es möglich als ein Kraftbeaufschlagungselement einen Niederhaltestempel vorzusehen, der mittels eines Elektromotors entlang eines Verstellweges relativ zur Portionskapsel verstellbar ist bzw. verstellt wird, um die Portionskapsel kraftzubeaufschlagen, insbesondere an einem radial vorstehenden Umfangsrand, an welchem noch weiter bevorzugt, insbesondere auf einer von einer Angriffsfläche des Niederhaltestempels abgewandten Seite eine Deckelfolie der Portionskapsel gesiegelt ist. Durch, beispielsweise translatorisches Verstellen des Niederhaltestempels entlang seines Verstellweges wird die Kapsel kraftbeaufschlagt und gegen ein Messer, insbesondere ein Ringmesser der Haushaltsbackvorrichtung verstellt, um somit eine Deckelfolie der Portionskapsel zu durchstoßen und die Kapsel somit zu öffnen und/oder um die Kapsel gegen eine Kapselauflage zu verstellen, um die Portionskapsel zu positionieren bzw. klemmend zu halten zwischen dem Niederhaltestempel und dieser Kapselauflage. Grundsätzlich ist es möglich, entweder einen Stößel oder (d.h. alternativ) einen Niederhaltestempel als Kraftbeaufschlagungselement vorzusehen. Bevorzugt ist jedoch eine Ausführungsform, bei der die Haushaltsbackvorrichtung sowohl einen Stößel als auch einen Niederhaltestempel umfasst, die mittels eines Elektromotors verstellbar sind. Dabei ist es wiederum möglich, sowohl dem Stößel als auch dem Niederhaltestempel einen eigenen Elektromotor zuzuordnen und das Motorsignal beider Elektromotoren oder nur eines der Elektromotoren gemäß der Lehre der Erfindung zu überwachen. Ganz besonders bevorzugt ist jedoch eine Ausführungsform, bei der Stößel und Niederhaltstempel mit einem gemeinsamen, insbesondere einzigen Elektromotor verstellbar sind bzw. verstellt werden und Stößel und Niederhaltestempel entsprechend mechanisch gekoppelt sind, wobei in diesem Fall ein Motorsignal dieses gemeinsamen Elektromotors gemäß der Erfindung überwacht wird. Unabhängig davon, ob Stößel und Niederhaltestempel mit einem gemeinsamen oder separaten Elektromotor entlang eines jeweiligen Verstellweges antreibbar sind ist es bevorzugt, wenn diese derart relativ zueinander angeordnet bzw. miteinander wirkverbunden sind, da Stößel und Niederhaltestempel relativ zueinander sowie relativ zur Portionskapsel bzw. einem Messer zum Durchstoßen der Kapseldeckelfolie und/oder einer Kapselauflage verstellbar sind. Ganz besonders bevorzugt ist eine Ausführungsform, bei der der Stößel innerhalb eines dann zumindest teilringförmigen Niederhaltestempels angeordnet ist, wobei der Niederhaltestempel, wie erwähnt, bevorzugt mit einem radial vorstehenden Umfangsrand der Portionskapsel zusammenwirkt, während der Stößel, bevorzugt zentrisch auf einem Portionskapselboden eines wannenartigen Portionskapselkörpers, insbesondere aus Kunststoff oder einer Leichtmetalllegierung einwirkt, um diesen wannenartigen Körper zum Herausdrücken der Teigportion zu deformieren, insbesondere nachdem die Portionskapsel mittels des Niederhaltestempels gegen ein Messer zum Durchstoßen einer Kapselfolie verstellt und/oder zwischen dem Niederhaltestempel und einer Kapselauflage geklemmt und somit für den Ausdrückvorgang fixiert wurde.

Im Hinblick auf die konkrete Realisierung der Vergleichsmittel bzw. des Vergleichs des elektrischen Motorsignals mit einem Referenzsignal gibt es unterschiedliche Ausführungsformen. Grundsätzlich möglich ist die Realisierung eines analogen Vergleichs, bei dem unmittelbar das analoge Motorsignal, insbesondere ein Stromaufnahmesignal mit einem in der Vorrichtung erzeugten Referenzsignal, insbesondere über eine Komparatorschaltung verglichen wird. Bevorzugt ist jedoch die Realisierung von digitalen Vergleichsmitteln, bei denen eine Vielzahl von diskreten Werten miteinander verglichen werden, also eine Vielzahl von elektrischen Motorsignalwerten bzw. -pegeln mit entsprechenden Referenzsignalpegeln bzw. Referenz-(grenz-)Werten, wobei bevorzugt diese Referenzsignalpegel, die in Summe das Referenzsignal bilden, bevorzugt in einem Speicher als Tabelle oder mathematische Funktion abgelegt sind. Bevorzugt erfolgt die Zuordnung der Motorsignalpegel zu den zugehörigen, für das Kraftbeaufschlagungselement positionsspezifischen Referenzsignalpegeln über für eine jeweilige Verstellposition des Kraftbeaufschlagungselementes entlang seines Verstellweges positionsindikative Signale. Anders ausgedrückt wird von den Überwachungsmitteln bei der Überwachung bzw. dem Vergleich eine Kraftbeaufschlagungselement- und/oder Niederhalteposition entlang des Verstellwertes anhand eines positionsindikativen Signals berücksichtigt, über welches ein aktuelles Motorsignal bzw. Ist-Motorsignal einem, insbesondere in einem Speicher abgelegten Referenzsignal bzw. Referenzsignalpegel zugeordnet wird. Bevorzugt werden die Verstellpositionen bzw. ein verstellpositionsindikatives Signal und das Motorsignal zu jedem Zeitpunkt während der Verstellbewegung und/oder mit einer hohen Taktfrequenzen erfasst.

Im Hinblick auf die Sensierung und/oder Bildung der positionsindikativen Signale gibt es unterschiedliche Möglichkeiten. So ist es beispielsweise möglich unmittelbar, beispielsweise über Lichtschranken oder Magnetcodierungen, usw. die aktuelle Position des Kraftübertragungselementes entlang des Verstellweges zu detektieren. Bevorzugt ist jedoch eine Ausführungsform, bei der die positionsindikativen Signale durch Integration von Umdrehungswinkeln oder Umdrehungen einer Motorwelle des Elektromotors oder eines drehmomentübertragend mit der Motorwelle des Elektromotors gekoppelten Dreh- und/oder Schwenkeinheit, insbesondere eines Getrieberades oder einer Exzenterwelle oder eines Hebelarms ermitteln, dass also mittelbar über mindestens ein mechanisch mit dem mindestens einen Kraftbeaufschlagungselement gekoppeltes, bewegtes Bauelement bzw. der Erfassung von dessen Teilbewegungen und der Integration derselben auf die sich hieraus ergebende Position des Kraftbeaufschlagungselementes geschlossen wird. Grundsätzlich ist es alternativ auch möglich, über eine Zeitmessung auf die Verstellposition des Kraftbeaufschlagungselementes entlang des Verstellweges zu schließen.

Für den bevorzugten Fall des Vorsehens sowohl eines Stößels als auch eines relativ hierzu verstellbaren Niederhaltestempels als Kraftbeaufschlagungselemente ist es, wie erwähnt, bevorzugt, wenn diese von einem gemeinsamen Elektromotor angetrieben werden bzw. antreibbar angeordnet sind, wozu Stößel und Niederhaltestempel mechanisch gekoppelt sind, insbesondere über eine von dem Elektromotor angetriebene Exzenterwelle mit der sowohl der Stößel als auch der Niederhaltestempel gelenkig verbunden sind, insbesondere an unterschiedlichen Umfangs- und/oder Radialpositionen. Bei einer mechanischen Kopplung von Stößel und Niederhaltestempel kann durch Integration der Umdrehungszahlen und/oder Umdrehungswinkeln nur eines bewegten Bauelementes der mechanischen Kopplung sowohl auf die Verstellposition des Stößels als auch des Niederhaltestempels geschlossen werden.

Bevorzugt erfolgt eine Initialisierung der Überwachungsmittel in einer Ausgangsposition des Kraftbeaufschlagungselementes, beispielsweise durch Betätigung eines Schalters, insbesondere eines Mikroschalters mittelbar oder unmittelbar durch Verstellen des Kraftbeaufschlagungselementes. Eine Initialisierung kann alternativ auch über eine entsprechende Sensorik, wie beispielsweise einer Lichtschranke oder dergleichen Sensoreinheit durchgeführt werden. Auch ist es denkbar, die Initialisierung so durchzuführen, dass ein bewegtes Element der Kapselentleerungseinrichtung gegen einen mechanischen Anschlag verstellt wird und beispielsweise durch Messen eines Stromanstiegs detektiert wird, dass sich Kraftbeaufschlagungselement und/oder Niederhaltestempel in einer (definierten bzw. gewünschten) Ausgangsposition befinden/befindet. Wesentlich ist, unabhängig von der konkreten Art der Initialisierung, dass das positionsindikative Signal aus einer durch die Initialisierung definierten Ausgangsposition heraus bestimmt wird.

Zur Erfassung der Umdrehungswinkel oder Umdrehungszahlen kann einem rotierenden Bauteil, beispielsweise der Motorwelle oder einem Getrieberad oder einem Schwenkhebel ein Drehwinkelgeber (Encoder) zugeordnet sein, der die Umdrehungswinkel und/oder Umdrehungen des betreffenden Bauteils aus einer Ausgangsposition (Initialisierungsposition) heraus detektiert. Grundsätzlich ist es dabei möglich, dass über eine Schaltung oder Software der Überwachungsmittel die detektierten Umdrehungen oder Umdrehungswinkel der Motorwelle oder eines anderen rotierten oder verschwenkten Bauteils über eine bekannte Übersetzung der Verfahrweg und damit eine Verstellposition des Kraftbeaufschlagungselementes entlang des Verstellweges umgerechnet werden. Auf diesen Schritt kann auch verzichtet werden und die Zuordnung von Motorsignalpegeln zu Referenzsignalpegeln kann unmittelbar über eine integrierte (aufaddierte) Umdrehungszahl oder integrierte Verdrehwinkel (aufaddierte Verdrehwinkel) erfolgen.

Weitere Vorteile Merkmale und Einzelheiten der Erfindung ergeben sich aus der nachfolgenden Beschreibung bevorzugte Ausführungsbeispiele sowie anhand der Zeichnungen.

Diese zeigen in:
- Fig. 1: eine Schnittansicht einer nach dem Konzept der Erfindung ausgebildeten Haushaltsbackvorrichtung mit einem Stößel und einem Niederhaltestempel als Kraftbeaufschlagungselemente, wobei sich diese in einer Ausgangsposition befinden,
- Fig. 2: einen anderen Betriebszustand der Haushaltsbackvorrichtung gemäß Fig. 1, bei der bereits eine Relativverstellung von Niederhaltestempel, Stößel und Portionskapsel stattgefunden hat, und
- Fig. 3: eine Diagramm, aus welchem der Verlauf eines Referenzsignals über einen Verstellweg eines Kraftbeaufschlagungselementes aufgetragen ist, sowie der Signalverlauf eines Motorsignals, hier einer Stromaufnahme des Elektromotors zum Verstellen des Kraftübertragungselementes.

In den Figuren sind gleiche Elemente und Elemente mit der gleichen Funktion mit den gleichen Bezugszeichen gekennzeichnet.

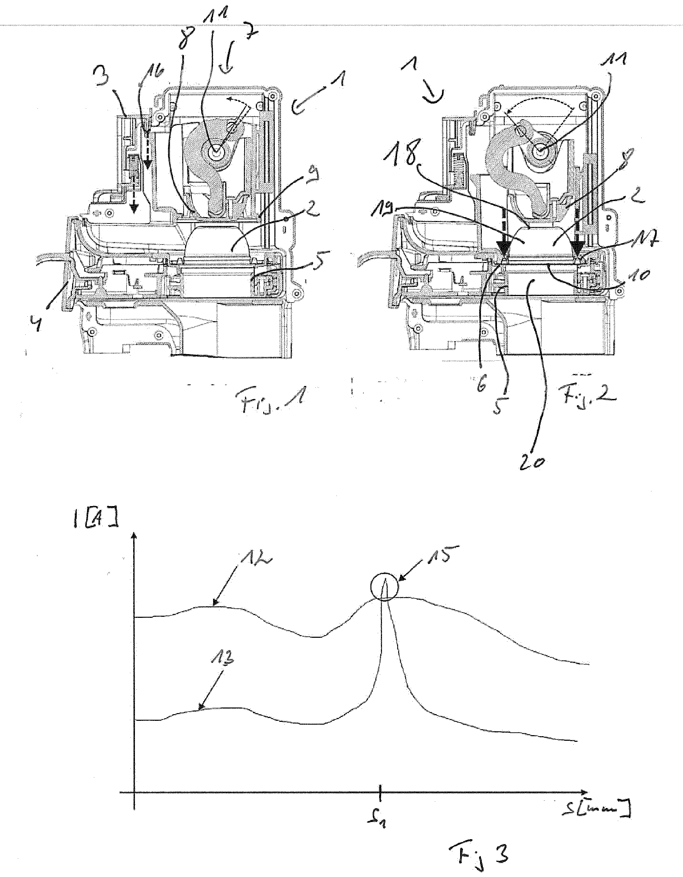

In den Fig. 1 und 2 ist ausschnittsweise eine Haushaltsbackvorrichtung 1 zum Backen eines Lebensmittelproduktes, vorliegend eines Flachbrotes, aus einer zunächst in einer Portionskapsel 2 aufgenommenen, nicht dargestellten Teigportion gezeigt.

Zur Zuführung der Portionskapsel 2 in ein Gehäuse 3 der Haushaltsbackvorrichtung 1 ist vorliegend eine fakultative Kapselschublade 4 vorgesehen, die aus einer Öffnung in einer Gehäusefrontseite herausziehbar ist. Die Kapselschublade 4 umfasst vorliegend auch ein Messer 5 gegen welches die Portionskapsel 2, wie später noch erläutert werden wird, zum Durchstoßen eines Kapseldeckels verstellbar ist. Ferner umfasst die Kapselschublade 4 eine Kapselauflage 6, gegen welche die Portionskapsel 2 verstellbar ist, um die Portionskapsel 2 während des eigentlichen Entleerungsvorgangs mittels eines später noch zu erläuternden Stößels zu klemmen bzw. zu fixieren. Bei Verzicht auf eine Kapselschublade 4 können Messer 5 und/oder Kapselauflage 6 fest, d.h. nicht im Wege einer Schublade herausziehbar, in dem Gehäuse 3 angeordnet werden, die Zuführung der Portionskapsel 2 an eine Entleerungsposition erfolgt dann auf andere Weise, beispielsweise durch unmittelbares, manuelles Einlegen oder über eine Rutsche der gleichen Zuführeinrichtung. Ganz grundsätzlich ist es auch möglich, auf eine Kapselauflage zu verzichten - in diesem Fall ist bevorzugt nur ein Messer vorgesehen, gegen das die Portionskapsel mittels eines Niederhaltestempels und/oder eines Stößels bewegt wird.

Nach dem Entleeren der Teigportion aus der Portionskapsel 2 gelangt die Portionskapsel in einer nicht eingezeichneten Backeinrichtung, in der die Teigportion, bevorzugt nach vorherigem Verflachen zu einem Flachbrot gebacken und danach ausgegeben wird.

Die Haushaltsbackvorrichtung 1 umfasst eine Kapselentleerungseinrichtung 7 mit einem Stößel 8 zum Kraftbeaufschlagen und dadurch deformieren der Portionskapsel 2 und damit Herausdrücken der Teigportion aus der Portionskapsel 2, insbesondere nach einem Öffnen der Portionskapsel 2. Zum Öffnen der Portionskapsel 2 wird diese mittels eines Niederhaltestempels 9 zunächst gegen das ringförmige Messer 5 verstellt und dann gegen die Kapselauflage 6 um die Portionskapsel 2 nach dem Durchstoßen eines Kapseldeckels 10 mittels des Messers 5 für den Auspressvorgang mittels des Stößels 8 zu fixieren.

Stößel 8 und Niederhaltestempel 9 bilden Kraftbeaufschlagungselemente der Haushaltsbackvorrichtung 1, die vorliegend in einer mechanisch gekoppelten Bewegung entlang eines jeweiligen, hier beispielhaft translatorischen Verstellweges von aus einer Zeichnungsebene oben in der Zeichnungsebene nach unten auf die Portionskapsel 2 verstellt werden. Zum gemeinsamen Antreiben von Stößel 8 und Niederhaltestempel 9 ist ein Elektromotor vorgesehen, mit welchen eine Exzenterwelle 11 rotierbar ist, wobei Stößel 8 und Niederhaltestempel 9 an unterschiedlichen Umfangssowie Radialpositionen gelenkig mit Exzentern der Exzenterwelle 11 gekoppelt sind, sodass eine gemeinsame Verstellbewegung resultiert, während welcher Stößel 8 und Niederhaltestempel 9 nicht nur relativ zur Portionskapsel 2 bzw. auf diese zu, sondern auch relativ zueinander verstellt werden.

Vorliegend ist beispielhaft der Exzenterwelle 11 ein nicht gezeigter Drehwinkelgeber (Encoder) zugeordnet, mit welchem die Umdrehungswinkel der Exzenterwelle 11 erfasst und von nicht eingezeichneten, signalleitend mit dem Encoder verbundenen Überwachungsmitteln, vorliegend umfassend einen Mikrokontroller aufaddiert bzw. integriert und somit auf eine Verstellposition von Stößel 8 und Niederhaltestempel 9 entlang ihres hier beispielhaft translatorischen Verstellweges geschlossen wird. Jeder Verstellposition ist ein Referenzsignalpegel eines Referenzsignals 12 (vgl. Fig. 3) zugeordnet. Bei dem Referenzsignal 12 handelt es sich somit um ein Grenzwertsignal dessen Signalverlauf über den Verstellweg s von Stößel 8 und Niederhaltestempel 9 aufgetragen ist. Als Referenzsignal ist vorliegend eine Stromaufnahme I vorgesehen. Mit diesem Referenzsignal 12 wird über den Verstellweg ein den Überwachungsmitteln zur Verfügung gestelltes Motorsignal 13, vorliegend ein Stromaufnahmesignal verglichen - hieraus resultiert also ein Vergleich des Motorsignalverlaufs 13 über den Verstellweg s mit einem Referenzsignalsverlauf 12 über den Verstellweg s. Lediglich beispielhaft überschreitet an einer Verstellwegsposition s₁ das Motorsignal 13 das Referenzsignal 12 im umkreisten Bereich 15. Somit ist die Motorstromaufnahme im Bereich 15 verglichen mit dem Referenzsignal 12 zu hoch, wodurch die Überwachungsmittel einen Fehler erkennen, der beispielsweise dadurch verursacht werden kann, dass Stößel und/oder Niederhaltstempel gegen eine falsch eingelegte bzw. positionierte Portionskapsel verstellt werden und/oder die Teigportion gefroren ist und/oder eine nicht für die Haushaltsbackvorrichtung zugelassene Portionskapsel verstellt wird. In der Folge lösen die Überwachungsmittel eine Aktion aus, beispielsweise das Zurückverstellen von Stößel 8 und Niederhaltestempel 9 in eine jeweilige Ausgangsposition. Vor jeder Verstellbewegung des Stößels 8 und des Niederhaltestempels 9 erfolgt eine Initialisierung, beispielsweise durch Betätigen eines Mikroschalters 16 in oder kurz nach der Ausgangsposition, wobei selbstverständlich auch alternative Initialisierungsmöglichkeiten umsetzbar sind.

Aus Fig. 2 ist ersichtlich, dass der Niederhaltestempel 9 mit einem radial vorstehenden Umfangsrand 17 der Portionskapsel 2 kraftbeaufschlagend zusammenwirkt. In dem Betriebszustand gemäß Fig. 2 hat der Stößel 8 die Portionskapsel 2 noch nicht erreicht. Bei einem Weiterverschwenken der Exzenterwelle 11 entgegen dem Uhrzeigersinn gelangt der Stößel 8 in Kontakt mit einem Boden 18 eines wannenförmigen Kapselkörpers 19 und deformiert diesen, wodurch die Teigportion aus der Portionskapsel 2, genauer dem Kapselkörper 19 herausgedrückt wird und durch eine Durchgangsöffnung 20 des Messers 5 durchgelangt, insbesondere hindurchfällt, um dann gebacken und ggf. verformt, bevorzugt verflacht zu werden.

### Bezugszeichenliste

- 1: Haushaltsbackvorrichtung
- 2: Portionskapsel
- 3: Gehäuse
- 4: Kapselschublade
- 5: Messer
- 6: Kapselauflage
- 7: Kapselentleerungseinrichtung
- 8: Stößel
- 9: Niederhaltestempel
- 10: Kapseldeckel
- 11: Exzenterwelle
- 12: Referenzsignal
- 13: Motorstromaufnahme
- 15: Bereich
- 16: Mikroschalter
- 17: Umfangsrand
- 18: Boden
- 19: Kapselkörper
- 20: Durchgangsöffnung

- s: Verstellweg
- I: Stromaufnahme

## Patentansprüche

1. Haushaltsbackvorrichtung zum Backen eines Lebensmittelproduktes, insbesondere eines Flachbrotes, aus einer zunächst in einer Portionskapsel (2) aufgenommenen Teigportion, umfassend eine Backeinrichtung zum Backen der Teigportion sowie eine Kapselentleerungseinrichtung (7) zum Entleeren der Teigportion aus einer Portionskapsel (2), wobei die Kapselentleerungseinrichtung (7) mindestens ein entlang eines Verstellweges verstellbares Kraftbeaufschlagungselement zum Kraftbeaufschlagen, insbesondere Deformieren und/oder Verstellen der Portionskapsel (2) aufweist, welches mit einem Elektromotor antreibbar ist,
**dadurch gekennzeichnet,**
**dass** der Kapselentleerungseinrichtung (7) Überwachungsmittel zum Überwachen des Portionskapselentleerungsvorgangs zugeordnet sind, umfassend Vergleichsmittel die dazu eingerichtet sind, einen Verlauf eines elektrischen Motorsignals, insbesondere eines Strom- oder Spannungssignals, über den Verstellweg des Kraftbeaufschlagungselementes auf Erreichen oder Überschreiten eines sich über den Verstellweg des Kraftbeaufschlagungselementes ändernden Referenzsignals (12) zu überwachen und bei Erreichen oder Überschreiten des Referenzsignals (12) eine Aktion auszuführen, und dass die Überwachungsmittel derart ausgebildet sind, dass die Aktion die Ausgabe eines, insbesondere optischen und/oder akustisches und/oder haptisch wahrnehmbares, Alarmsignal ist oder umfasst und/oder dass die Aktion ein Stoppen oder Verlangsamen der Verstellbewegung des Kraftbeaufschlagungselementes in Richtung Auflage zu und/oder ein Rückverstellen des Kraftbeaufschlagungselementes in eine Ausgangsposition ist oder umfasst.

2. Haushaltsbackvorrichtung nach einem der vorhergehenden Ansprüche,
dadurch gekennzeichent,
dass ein Stößel (8) zum Deformieren der Portionskapsel (2) zum Entleeren der Teigportion aus der Portionskapsel (2) als Kraftbeaufschlagungselement vorgesehen ist und/oder dass ein, insbesondere relativ zu dem Stößel (8) verstellbarer, Niederhaltestempel (9) zum Verstellen der Portionskapsel (2) gegen ein Messer (5) zum Durchstoßen einer Deckelfolie der Portionskapsel (2) und/oder zum klemmenden Halten der Portionskapsel (2) zwischen dem Niederhaltestempel (9) und einer Kapselauflage (6) als Kraftbeaufschlagungselement vorgesehen sind/ist.

3. Haushaltsbackvorrichtung nach einem der Ansprüche 1 und 2,
**dadurch gekennzeichnet,**
**dass** die Überwachungsmittel Motorsignalpegeln des Motorsignals Referenzsignalpegel des Referenzsignals (12) über für eine jeweilige Verstellposition des Kraftbeaufschlagungselementes entlang des Verstellweges positionsindikative Signale zuordnend ausgebildet sind.

4. Haushaltsbackvorrichtung nach Anspruch 3,
**dadurch gekennzeichnet,**
**dass** die Überwachungsmittel die positionsindikativen Signale durch Integration von Umdrehungswinkeln oder Umdrehungen einer Motorwelle des Elektromotors oder eines drehmomentübertragend mit der Motorwelle des Elektromotors gekoppelten Dreh- und/oder Schwenkeinheit, insbesondere eins Getrieberades oder einer Exzenterwelle (11), oder eines Hebelarms, ermittelnd ausgebildet sind.

5. Haushaltsbackvorrichtung nach Anspruch 4,
**dadurch gekennzeichnet,**
**dass** den Überwachungsmittel Initialisierungsmittel zum Setzen einer Ausgangsposition für die Integration zugeordnet sind.

6. Haushaltsbackvorrichtung nach einem der Ansprüche 3 bis 5,
**dadurch gekennzeichnet,**
**dass** den Überwachungsmitteln ein Speicher zugeordnet ist, in dem das Referenzsignal, insbesondere die Referenzsignalpegel, mit zugehörigen Positionsinformationen hinterlegt sind.

7. Haushaltsbackvorrichtung nach einem der vorhergehenden Ansprüche,
**dadurch gekennzeichnet,**
**dass** die Referenzsignalpegel entlang des Verstellweges des Kraftbeaufschlagungselementes in Richtung auf eine Kapselauflage (6) und/oder ein Messer (5) zu zunehmen.

8. Verfahren zum Betreiben einer Haushaltsbackvorrichtung (1), bevorzugt nach einem der vorhergehenden Ansprüche, zum Backen eines Lebensmittelproduktes, insbesondere eines Flachbrotes, wobei in einer Kapselentleerungseinrichtung (7) der Haushaltsbackvorrichtung (1) zum Entleeren einer Teigportion aus einer Portionskapsel (2) ein Kraftbeaufschlagungselement, insbesondere ein Stößel (8) und/oder ein Niederhaltestempel (9), mit einem Elektromotor derart angetrieben wird, dass dieses entlang eines Verstellweges verstellt wird und die Portionskapsel (2) kraftbeaufschlagt, insbesondere deformiert und/oder verstellt,
**dadurch gekennzeichnet,**
**dass** ein Verlauf eines elektrischen Motorsignals, insbesondere eines Strom- oder Spannungssignals, über den Verstellweg des Kraftbeaufschlagungselementes auf Erreichen oder Überschreiten eines sich über den Verstellweg des Kraftbeaufschlagungselementes ändernden Referenzsignals (12) überwacht wird und bei Erreichen oder Überschreiten des Referenzsignals (12) eine Aktion ausgeführt wird, und dass als Aktion ein, insbesondere optischen und/oder akustisches und/oder haptisch wahrnehmbares, Alarmsignal ausgegeben wird und/oder als Aktion ein Stoppen oder Verlangsamen der Verstellbewegung des Kraftbeaufschlagungselementes in Richtung auf die Portionskapsel (2) zu und/oder ein Rückverstellen des Kraftbeaufschlagungselementes in eine Ausgangsposition durch entsprechende Ansteuerung des Elektromotors durchgeführt wird.

9. Verfahren nach Anspruch 8,
**dadurch gekennzeichnet,**
**dass** bei Ausbleiben der Aktion die Teigportion gebacken wird, bevorzugt nach und/oder während einer Verformung, insbesondere Verflachung der Teigportion.

10. Verfahren nach einem der Ansprüche 8 oder 9,
**dadurch gekennzeichnet,**
**dass** zur Überwachung des Verlaufs des elektrischen Motorsignals während der Verstellbewegung Motorsignalpegel verglichen werden mit, bevorzugt in einem Speicher hinterlegten, Referenzsignalpegeln, wobei die Zuordnung von zu vergleichenden Motorsignalpegeln und Referenzsignalpegeln über für eine jeweilige Verstellposition des Kraftbeaufschlagungselementes entlang des Verstellweges positionsindikative Signale erfolgt.

11. Verfahren nach Anspruch 10,
**dadurch gekennzeichnet,**
**dass** die positionsindikativen Signale durch Integration von Umdrehungswinkeln oder Umdrehungen einer Motorwelle oder eines drehmomentübertragend mit der Motorwelle gekoppelten Dreh- und/oder Schwenkeinheit, insbesondere eins Getrieberades oder einer Exzenterwelle (11), oder eines Hebelarms, ermittelt werden.

12. Verfahren nach Anspruch 11,
**dadurch gekennzeichnet,**
**dass** ein Sensor zum Erfassen der Umdrehungswinkel und/oder Umdrehungen vor Beginn der Integration zur Definition einer Ausgangsposition des Kraftbeaufschlagungselementes initialisiert wird.

13. Verfahren nach einem der Ansprüche 8 bis 12,
**dadurch gekennzeichnet,**
**dass** die Referenzsignalpegel entlang des Verstellweges des Kraftbeaufschlagungselementes in Richtung auf die Portionskapsel (2) zu zunehmen

## Claims

1. A domestic baking device for baking a food product, in particular a flat bread, from a dough portion initially held in a portion capsule (2), the domestic baking device comprising a baking apparatus for baking the dough portion and a capsule-emptying apparatus (7) for removing the dough portion from a portion capsule (2), the capsule-emptying apparatus (7) having at least one force application element, which can be moved along a movement path, for applying force to, in particular deforming and/or moving, the portion capsule (2), which force application element can be driven by means of an electric motor,
**characterized in that**
the capsule-emptying apparatus (7) is assigned monitoring means for monitoring the portion capsule emptying operation, the monitoring means comprising comparing means, which are designed to monitor the curve of an electrical motor signal, in particular a current or voltage signal, over the movement path of the force application element for the reaching or exceeding of a reference signal (12), which changes over the movement path of the force application element, and to perform an action if the reference signal (12) is reached or exceeded and that the monitoring means are configured in such a manner that the action is or comprises putting out a warning signal, in particular a visual and/or acoustic and/or haptic warning signal, and/or that the action is or comprises stopping or slowing down the movement of the force application element towards the support and/or returning the force application element to an initial position.

2. The domestic baking device according to any one of the preceding claims,
**characterized in that**
a plunger (8) for deforming the portion capsule (2) for removing the dough portion from the portion capsule (2) is provided as a force application element and/or that a holding-down punch (9), being adjustable in particular relative to the plunger (8), for moving the portion capsule (2) against a blade (5) for puncturing a lid film of the portion capsule (2) and/or for clamping the portion capsule (2) between the holding-down punch (9) and a capsule support (6) are/is provided as a force application element.

3. The domestic baking device according to claim 1 or 2,
**characterized in that**
the monitoring means are configured to match reference signal levels of the reference signal (12) with motor signal levels of the motor signal via signals indicative of respective movement positions of the force application element along the movement path.

4. The domestic baking device according to claim 3,
**characterized in that**
the monitoring means are configured to determine the signals indicative of the position by integrating rotation angles or rotations of a motor shaft of the electric motor or of a rotating and/or pivoting unit coupled with the motor shaft of the electric motor to transmit a torque, in particular a gear wheel or an eccentric shaft (11) or a lever arm.

5. The domestic baking device according to claim 4,
**characterized in that**
initialization means for setting an initial position for the integration are assigned to the monitoring means.

6. The domestic baking device according to any one of claims 3 to 5,
**characterized in that**
a memory in which the reference signal, in particular the reference signal levels, are stored with the associated position information is assigned to the monitoring means.

7. The domestic baking device according to any one of the preceding claims,
**characterized in that**
the reference signal levels increase along the movement path of the force application element towards a capsule support (6) and/or a blade (5).

8. A method for operating a domestic baking device (1), preferably according to any one of the preceding claims, for baking a food product, in particular a flat bread, a force application element, in particular a plunger (8) and/or a holding-down punch (9) in a capsule-emptying apparatus (7) of the domestic baking device (1) for removing a dough portion from a portion capsule (2) being driven by an electric motor in such a manner that it is moved along a movement path and applies force to, in particular deforms and/or moves, the portion capsule (2),
**characterized in that**
a curve of an electrical motor signal, in particular a current or voltage signal, over the movement path of the force application element is monitored for the reaching or exceeding of a reference signal (12), which changes over the movement path of the force application element, and an action is performed if the reference signal (12) is reached or exceeded, and that as the action, a warning signal, in particular a visual and/or acoustic and/or haptic warning signal, is output and/or the movement of the force application element towards the portion capsule (2) is stopped or slowed down and/or the force application element is returned to an initial position through corresponding driving of the electric motor.

9. The method according to claim 8,
**characterized in that**
the dough portion is baked if no action is performed, preferably after and/or during a deforming, in particular a flattening of the dough portion.

10. The method according to claim 8 or 9,
**characterized in that**
motor signal levels are compared to reference signal levels, which are preferably stored in a memory, in order to monitor the curve of the electrical motor signal during the movement, motor signal levels and reference signal levels to be compared being matched via signals indicative of the position of respective movement positions of the force application element along the movement path.

11. The method according to claim 10,
**characterized in that**
the signals indicative of the position are determined by integrating rotation angles or rotations of a motor shaft or of a rotating or pivoting unit coupled with the motor shaft to transmit a torque, in particular a gear wheel or an eccentric shaft (11) or a lever arm.

12. The method according to claim 11,
**characterized in that**
a sensor for detecting the rotation angles and/or rotations is initialized prior to the integration to define an initial position of the force application element.

13. The method according to any one of claims 8 to 12,
**characterized in that**
the reference signal levels increase along the movement path of the force application element towards the portion capsule (2).

## Revendications

1. Dispositif de cuisson domestique destiné à cuire un produit alimentaire, notamment un pain plat, à partir d'une portion de pâte initialement contenue dans une capsule de portion (2), le dispositif de cuisson domestique comprenant un appareil de cuisson destiné à cuire la portion de pâte et un appareil de vidage de capsule (7) destiné à vider la portion de pâte d'une capsule de portion (2), l'appareil de vidage de capsule (7) ayant au moins un élément d'application de force qui est déplaçable le long d'un trajet de déplacement et qui est destiné à appliquer une force, notamment à déformer et/ou à déplacer la capsule de portion (2), et qui peut être entrainé par un moteur électrique,
**caractérisé en ce que**
des moyens de contrôle destinés à contrôler l'opération de vidage de la capsule de portion sont assignés à l'appareil de vidage de capsule (7) et comprennent des moyens de comparaison qui sont destinés à contrôler une allure d'un signal électrique du moteur, notamment d'un signal de courant ou d'un signal de tension, sur le trajet de déplacement de l'élément d'application de force afin de détecter l'atteinte ou le dépassement d'un signal de référence (12) qui change sur le trajet de déplacement de l'élément d'application de force et destinés à effectuer une action si le signal de référence (12) est atteint ou dépassé, et que les moyens de contrôle sont configurés de telle manière que l'action est ou comprend la sortie d'un signal d'alerte, notamment un signal d'alerte visuel et/ou acoustique et/ou tactile, et/ou que l'action est ou comprend un arrêt ou un ralentissement du mouvement de déplacement de l'élément d'application de force vers le support et/ou un retour de l'élément d'application de force à une position de départ.

2. Dispositif de cuisson domestique selon l'une quelconque des revendications précédentes,
**caractérisé en ce**
**qu'**un poussoir (8) destiné à déformer la capsule de portion (2) afin de vider la portion de pâte de la capsule de portion (2) est prévu comme l'élément d'application de force et/ou qu'un poinçon de maintien (9) qui est notamment déplaçable relativement au poussoir (8) et qui est destiné à déplacer la capsule de portion (2) contre une lame (5) destinée à percer une feuille de recouvrement de la capsule de portion (2) et/ou destinée à serrer la capsule de portion (2) entre le poinçon de maintien (9) et un support de capsule (6) est/sont prévue(s) comme l'élément d'application de force.

3. Dispositif de cuisson domestique selon la revendication 1 ou la revendication 2,
**caractérisé en ce que**
les moyens de contrôle sont configurés pour mettre en correspondance des niveaux du signal de référence (12) avec des niveaux du signal de moteur par des signaux indicatifs d'une position de déplacement respective de l'élément d'application de force le long du trajet de déplacement.

4. Dispositif de cuisson domestique selon la revendication 3,
**caractérisé en ce que**
les moyens de contrôle sont configurés pour déterminer les signaux indicatifs de la position par l'intégration des angles de rotation ou des rotations d'un arbre du moteur électrique ou d'une unité de rotation et/ou de pivotement qui est couplée à l'arbre du moteur électrique pour transmettre un couple, notamment d'une roue dentée ou d'un arbre excentrique (11) ou d'un bras de levier.

5. Dispositif de cuisson domestique selon la revendication 4,
**caractérisé en ce que**
des moyens d'initialisation destinés à définir une position de départ pour l'intégration sont assignés aux moyens de contrôle.

6. Dispositif de cuisson domestique selon l'une quelconque des revendications 3 à 5,
**caractérisé en ce**
**qu'**une mémoire dans laquelle le signal de référence, notamment les niveaux du signal de référence, sont enregistrés avec des informations de position associées est assignée aux moyens de contrôle.

7. Dispositif de cuisson domestique selon l'une quelconque des revendications précédentes,
**caractérisé en ce que**
les niveaux du signal de référence augmentent le long du trajet de déplacement de l'élément d'application de force vers un support de capsule (6) et/ou une lame (5).

8. Procédé de fonctionnement d'un dispositif de cuisson domestique (1), de préférence selon l'une quelconque des revendications précédentes, destiné à cuire un produit alimentaire, notamment un pain plat, un élément d'application de force, notamment un poussoir (8) et/ou un poinçon de maintien (9), dans un appareil de vidage de capsule (7) du dispositif de cuisson domestique (1) destiné à vider une portion de pâte d'une capsule de portion (2) étant entrainé par un moteur électrique de telle manière qu'il est déplacé le long d'un trajet de déplacement et applique une force sur, notamment déforme et/ou déplace, la capsule de portion (2),
**caractérisé en ce**
**qu'**une allure d'un signal électrique du moteur, notamment d'un signal de courant ou d'un signal de tension, sur le trajet de déplacement de l'élément d'application de force est contrôlée afin de détecter l'atteinte ou le dépassement d'un signal de référence (12) qui change sur le trajet de déplacement de l'élément d'application de force et une action est effectuée si le signal de référence est atteint ou dépassé, et que l'action est la sortie d'un signal d'alerte, notamment un signal d'alerte visuel et/ou acoustique et/ou tactile, et/ou que l'action est un arrêt ou un ralentissement du mouvement de déplacement de l'élément d'application de force vers la capsule de portion (2) et/ou un retour de l'élément d'application de force à une position de départ par une commande correspondante du moteur électrique.

9. Procédé selon la revendication 8,
**caractérisé en ce que**
si aucune action est effectuée, la portion de pâte est cuite, de préférence après et/ou pendant une déformation, notamment un aplatissement de la portion de pâte.

10. Procédé selon la revendication 8 ou la revendication 9,
**caractérisé en ce que**
des niveaux du signal de moteur sont comparés aux niveaux du signal de référence, qui sont, de préférence, enregistrés dans une mémoire, afin de contrôler l'allure du signal électrique du moteur pendant le mouvement de déplacement, des niveaux du signal de moteur et des niveaux du signal de référence à comparer sont mis en correspondance par des signaux indicatifs d'une position de déplacement respective de l'élément d'application de force le long du trajet de déplacement.

11. Procédé selon la revendication 10,
**caractérisé en ce que**
les signaux indicatifs de la position sont déterminés par l'intégration des angles de rotation ou des rotations d'un arbre du moteur ou d'une unité de rotation et/ou de pivotement qui est couplée à l'arbre du moteur pour transmettre un couple, notamment d'une roue dentée ou d'un arbre excentrique (11) ou d'un bras de levier.

12. Procédé selon la revendication 11,
**caractérisé en ce**
**qu'**un capteur destiné à capturer les angles de rotation et/ou les rotations est initialisé avant le début de l'intégration pour définir la position de départ de l'élément d'application de force.

13. Procédé selon l'une quelconque des revendications 8 à 12,
**caractérisé en ce que**
les niveaux du signal de référence augmentent le long du trajet de déplacement de l'élément d'application de force vers la capsule de portion (2).
